# EUROPEAN PATENT SPECIFICATION

(11) **EP 2 674 915 B1**
(45) Date of publication and mention of the grant of the patent: **11.01.2017**
(21) Application number: 12172826.5
(22) Date of filing: 20.06.2012
(51) Int. Cl.: G06T 11/20

(54) **System and method for scaling vector-based graphic designs**
System und Verfahren zum Skalieren von vektorbasierten Grafikdesigns
Système et procédé de mise à l'échelle de conceptions graphiques vectorielles

(30) Priority: 14.06.2012 US 201213523494
(43) Date of publication of application: 18.12.2013
(73) Proprietor: BlackBerry Limited, Waterloo, ON N2K 0A7 (CA); Research in Motion Corporation, Wilmington, DE 19801 (US)
(72) Inventor: Suchomel, Petr, Redwood City California 94065 (US)
(74) Representative: Gill Jennings & Every LLP

(56) References cited:
- WO-A1-94/06094
- US-A1- 2007 139 413

## Description

### FIELD

The present disclosure relates generally to digital imaging. More particularly, the present disclosure relates to processing vector-based graphics.

### BACKGROUND

Due to flexibility, when compared to bitmap graphics, vector-based graphics are appropriate for designs used in video games, user interfaces (Uls), or other applications. Typically, vector-based graphic design is carried out in one of several commercially-available software applications. Examples include Adobe® Creative Suite® GNU Image Manipulation Program (GIMP), Microsoft® Visio®, etc. Vector-based graphics allow designers more flexibility for their designs to be used in devices having, for example, different form factors, screens, and resolutions that typical bitmap masks cannot easily address.

Vector-based graphic designs may suffer from certain disadvantages when they undergo transformations, such as rescaling original master designs to designs having a different scale. Alignment errors may occur during such transformations. These alignment errors can lead to visually un-sharp (blurry) rescaled designs. For example, a vector-based graphic design based on a vector mask created by a designer using a commercially-available graphic design suite, will typically have, when rendered, sharply defined edges, at pre-determined locations, since the control points and related paths of the vector-based graphic will have been aligned with (snapped to) integer coordinates in the design process. For these vector-based graphic designs, integer coordinates are translated to whole pixels during rendering. However, when rescaled by an arbitrary value, such as a non-integer value, the control points (nodes) previously aligned to integer values may be repositioned and their coordinates may not be located at integer values anymore. As a consequence, rendering these control points and their associated paths will result in the control points and paths being rendered at non-integer pixel values, which can result in a blurred lines or edges.

Improvements in vector based designs transformations are, therefore, desirable.

US 2007/0139413 A1 discloses an auto hinting module that defines typographically relevant control points and relative offset constraints for use in composite character generation. Control points in one or more dimensions are defined for each glyph component. The control points may be represented as control points on the outline of the component glyphs, although control points may also be represented by control points positioned relative to the outlines, control lines (e.g., vertical, horizontal, diagonal, etc.) that intersect the outlines, etc. A composite character font hinting module enforces offset constraints between the control points, effectively positioning one of the glyph components relative to the other.

According to a first aspect, there is provided a computer-implemented method as set out in Claim 1.

According to a second aspect, there is provided a system as set out in claim 10.

According to a third aspect, there is provided a non-transitory computer-readable medium as set out in claim 11.

### BRIEF DESCRIPTION OF THE DRAWINGS

Examples of the present disclosure will now be described, by way of example only, with reference to the attached Figures.
Fig. 1A is a depiction of an exemplary vector-based graphic design having a single vector mask shown relative to a coordinate system.
Fig. 1B shows an array of pixels overlaid on a coordinate system.
Fig. 2 is a flowchart depicting the methods of processing an image according to certain examples of the present disclosure.
Fig. 3 is a depiction of a vector-based graphic design prior to rescaling or resizing.
Fig. 4 is a depiction of a vector-based graphic design following gross rescaling according to certain examples of the present disclosure.
Fig. 5 shows a depiction of a vector-based graphic design following resizing according to a rescaling adjustment factor in certain examples.
Fig. 6 is a depiction of a vector-based graphic design following translating by a translation adjustment value in some examples.
Fig. 7 is a depiction of a vector-based graphic design following translation of each control point in an inner path by node adjustment valued in accordance with some examples of the present disclosure.
Fig. 8 is a depiction of a vector-based graphic design prior to rescaling or resizing.
Fig. 9 is a depiction of a vector-based graphic design following rescaling.

### DETAILED DESCRIPTION

For the purpose of the present disclosure, a vector-based graphic design is a set of parameters that includes control points, coordinates of the control points, paths (which can also be referred to as vectors or strokes), and attributes of the paths. The attributes can include, for vectors, a direction, a color, a shape, a thickness, and a fill. A path is defined by at least two control points. A vector mask of the vector-based graphic design is defined by one or more paths. A vector-based graphic design may have one or more than one vector mask. A vector-based graphic design can be rendered to produce an image, or rendition, of the vector-based graphic design.

Generally, the present disclosure provides a method and system for automatically rescaling an original vector-based graphic design (or master vector-based graphic design). The method and system are such that the appearance of the rendered, rescaled vector-based graphic design will be, within pre-determined tolerances, the same as the appearance of the original vector-based graphic design. In a first aspect, the present disclosure provides a computer-implemented method of transforming a vector-based graphic design. The method comprises: rescaling the vector-based graphic design by a non-integer rescaling factor, the vector-based graphic design including control points, the control points having coordinates in a workspace coordinate system, each control point having relative spatial inter-relationships to other control points of the vector-based graphic design and having a positional relationship relative to the workspace coordinate system; automatically determining minimum adjustments for each control point of the rescaled vector-based graphic design to preserve, within threshold tolerances, the relative spatial inter-relationships and the positional relationship relative to the workspace coordinate system; adjusting a position of the control points of the rescaled vector-based graphic design in accordance with the minimum adjustments; and storing the rescaled vector-based graphic design in a non-transitory, tangible computer-readable medium.

In a second aspect of the present disclosure, there is provided a system that comprises: a display; a processor configured to: rescale a vector-based graphic design by a non-integer rescaling factor, the vector-based graphic design including control points, the control points having coordinates in a workspace coordinate system, each control point having relative spatial inter-relationships to other control points of the vector-based graphic design and having a positional relationship relative to a workspace coordinate system; automatically determine minimum adjustments for each control point of the rescaled vector-based graphic design to preserve, within threshold tolerances, the relative spatial inter-relationships and the positional relationship relative to the workspace coordinate system; adjust a position of the control points of the rescaled vector-based graphic design in accordance with the minimum adjustments; and render the rescaled vector-based graphic design to the display.

Digital imaging and graphic design typically involve one of two types of graphics. The first are pixel-based or "bitmap" graphics, which are a spatially-mapped array of bits. A bitmap contains information that, when rendered, causes particular pixels to be activated on a display. The combined pixels make up an image that can be viewed on the display. Very little processing is required when rendering a bitmap.

The second type of graphic is a vector-based graphic. A vector-based graphic is a rendition of a vector-based graphic design. Various aspects of a vector-based graphic are related to mathematical relationships or geometrical expressions defined relative to a coordinate system, which can be referred to as the workspace coordinate system. Designer tools allow the designers to modify a vector-based graphic design by manipulating components of the vector-based graphic design within the workspace coordinate system. The mathematical expressions that define the various lines, curves, or other shapes that make up the vector-based graphic, such as Bezier curves, are defined in the vector-based graphic design and include start and end control points (which can be referred to as control nodes). In addition, the paths (also referred to as vectors or strokes) comprised in a vector-based graphic design, may pass through, or be associated with additional control points. The control points are located within a particular coordinate system defining the workspace of the vector-based graphic design. In addition to their location within the coordinate system, the control points can also define the direction of any vector that passes through or is associated with them.

Vector-based graphic designs themselves may contain one or more vector "masks," which are objects defined by individual paths representing layers in the vector-based graphic design and allow a designer to place overlays and overlapping objects with varying properties and effects. Significantly complex and robust vector-based graphic designs are typically easier to transform that their counterpart bitmap designs.

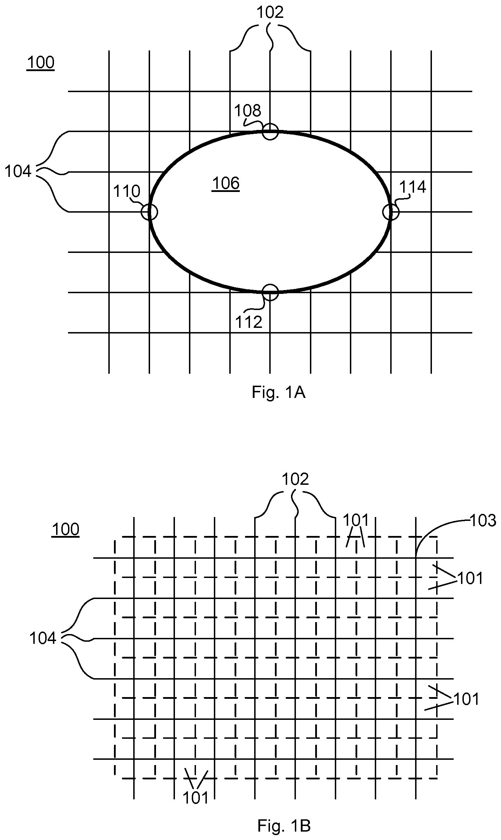

Figure 1A shows a depiction of a vector-based graphic design **106** relative to an underlying coordinate system **100.** For greater certainty, the depiction of Figure 1A is not the result of rendering the vector-based graphic design in question. Rather, it is a depiction of the vector-based graphic design in the workspace coordinate system. While the figure and the discussion herein use rectangular or Cartesian coordinates, one of ordinary skill in the art will appreciate that the examples of the present disclosure are equally applicable to any coordinate system that can be used in graphic design, including, but not limited to, polar, cylindrical, spherical-polar, etc.

Figure 1B shows the coordinate system **100** overlaid on an array of pixels 101 that make up a display on which the vector-based graphic design is to be rendered.

The vector-based graphic design **106** is that of an ellipse designed relative to a Cartesian coordinate system (which is a type of workspace coordinate system)represented by vertical grid lines **102** and horizontal grid lines **104,** defining vertical and horizontal coordinates, respectively. The grid lines **102, 104** are for illustration purposes only and are not part of the vector-based graphic design.

According to examples, the intersections between grid lines **102, 104** coincide with the center of pixels when a vector-based graphic design is rendered to actual graphics (image or on screen). Fig. 1B shows such a center **103** of a pixel **101.** As such, the intersections of grid lines **102** and **104** represent pixel centers. As one of ordinary skill in the art will appreciate, any vectors in vector-based graphic design that are snapped to one of these lines will be snapped to an integer pixel value when rendered. These rendered vectors typically have a good visual appearance as they are rendered using entire pixels without applying proportional values to neighboring pixels. On the other hand, paths defined by control points that, when rendered, do not coincide with pixel locations may have a degraded visual appearance compared to the original appearance. This is because the edges of such control points must be defined by more than one pixel when rendered, since the spatial location of the control points causes the vectors to blend between pixel boundary lines.

Control points of a vector-based graphic design have a relationship to the coordinate system in which they are displayed (e.g., Fig. 1A) as well as a relationship to the other control points of the vector-based graphic design. These relationships can be relative spatial inter-relationships that define the location of the control points relative to one another, and can include, among others, the relative distance between two control points, their relative alignment along a particular axis or grid line, the angular separation or the angular relationship between two control points (e.g., whether vectors defined by the control points should be at right angles to one another), etc.

The relationships may include positional relationships relative to pixels. The positional relationships are calculated (obtained) prior to rescaling a vector-based graphic design. These positional relationships include information such as whether the control points are snapped to a particular axis or axes, prior to rescaling, in a workspace coordinate system or whether the position of the control point corresponds to integer coordinate values or not. These positional relationships can also identify a control point as a smooth point (smooth node) or as a corner point (corner node) or specify that a control point has an integer or a non-integer (off integer) coordinate in the workspace coordinate system.. In the context of the present disclosure, a smooth control point is a control point that has associated thereto one or more handle nodes or handles that define the curvature of a line between control points by "attracting" the line; a handle is, in a sense, an auxiliary control point that need not lie on the line whose shape is influenced by the handle. A corner control point is a control point that defines an intersection of two lines or the end of a line; a corner control point either does not have handles associated thereto, or its handles are co-located with the corner point.

The examples of relative spatial inter-relationships and positional relationships are not intended to be exhaustive. Any information regarding how control points in a vector-based graphic design or mask relate to one another, to control points on another path and their respective handles for smooth control points, or to pixels can be considered information pertaining to relationships between the control points.

In Figure 1A, the vector-based graphic design depicted at **106,** is represented by a vector mask defined by a path, which is for example, a mathematical representation of the depicted ellipse. The vector mask's path (or vector mask) has a number of control points that define it with reference to coordinate system **100.** Exemplary control points **108, 110, 112,** and **114** appear on the perimeter of the ellipse. The control points **108, 110, 112,** and **114,** together with any other control points necessary to define the ellipse, define the vector-based graphic design depicted at **106.**

In many scenarios a vector-based graphic design can be rescaled or resized without loss of resolution of the rendered vector-based graphic design, i.e., without loss in the rescaled image. However, when the vector-based graphic design is rescaled by certain non-integer scaling factors, the coordinate values of the control points, whether or not they are located at integer coordinate values, will be multiplied by a non-integer factor. As a result, control points, which were "snapped" to integer coordinates in the original vector-based graphic design, may be located off integer coordinates in the rescaled vector-based graphic design and, as result, there will be a loss of sharpness in the rendered rescaled vector-based graphic design. In such a case, a graphic designer typically edits each vector-based graphic design following rescaling and manually adjusts and/or re-aligns control points in the entire vector-based graphic design. This can be a very time consuming process, particularly for more complex vector-based graphic designs having a large number of control points.

If a user wishes to scale a vector-based graphic design to a new size (either larger or smaller), the coordinates of each control point will be multiplied by a scaling factor. In cases where the vector-based graphic design is scaled by an integer-scaling factor, the control points that were on integer coordinate values in the original vector-based graphic design will also be on integer coordinate values in the scaled vector-based graphic design. One example is a vector in a Cartesian coordinate system having a first control point located at [1,1] (i.e., x-coordinate = 1, y-coordinate = 1) and a second corner control point located at [2,2] (i.e., x-coordinate = 2, y-coordinate = 2). To scale the vector by a factor of 2, each coordinate of the control points is simply doubled, and the resulting coordinates will be located at [2,2] and [4,4]. In such a case, the relationships between the control points themselves and the relationships between the control points and the coordinate system will be preserved - both control points are still at integer coordinates values and maintain the same angular relationship with respect to each other. Additionally, as the rescaled control point coordinates are at integer coordinate values, rendering the rescaled vector-based graphic design will result in the rendered vector-based graphic design having the same visual appearance it had before scaling. Resizing a vector-based graphic design by an integer scaling factor is appropriate in a number of cases. For example, if a user interface ("UI") for an application is built with vector-based graphic designs for rendering on a display on a screen of an electronic device with a given resolution, and that application needs to be "upscaled" so that it can be displayed on a screen having twice the resolution of the original screen, all vector-based graphic designs in the UI may be scaled in size by a factor of two without concern.

However, if a user wishes to scale a vector-based graphic design by non-integer scaling factor, the appearance of the rendered scaled vector-based graphic design will not be the same as that of the rendered original vector-based graphic design. In the same example discussed above, consider a rescaling where each coordinate of the control points is multiplied by a factor of 2.5. The resulting coordinates will therefore be [2.5,2.5] and [5, 5]. The first control point is no longer located at an integer value and therefore, a rendering of the scaled vector-based graphic design will result in the rendered control point being located between pixels. As a result, part of the rendered image will lose its its original appearance as its first control point of design is no longer located at a pixel center in the rescaled vector-based graphic design.

Following such non-integer rescaling of the vector-based graphic design, a graphic designer may then have to manually adjust each control point that defines paths in the vector masks to move it to a new coordinate that preserves or best approximates the relationships that existed in the corresponding control points of the vector-based graphic design prior to scaling.

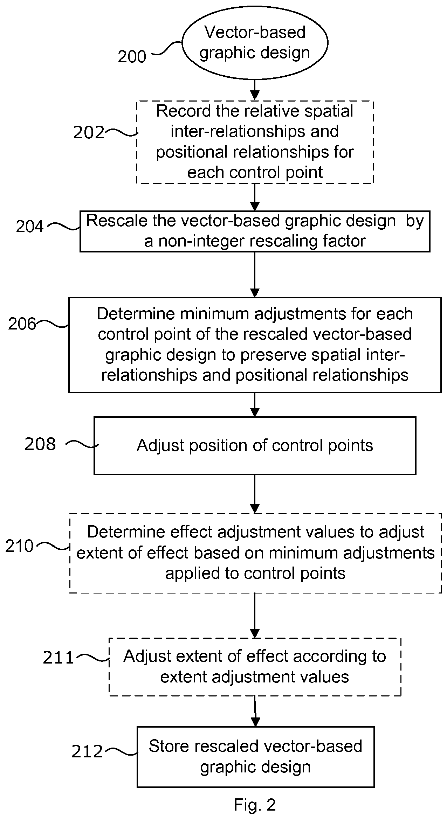

Figure 2 is a flowchart of a method according to certain examples of the present disclosure. The process begins with a vector-based graphic design at **200,** which, as noted above, comprises a number of control points. Information about each control point, its location, properties, inter-relationships with other control points and positional relationships may be known or, optionally, can be determined, and recorded at **202.** The sum of this information can be referred to as a snapshot of the (original) vector-based graphic design. The vector-based graphic design is then rescaled by a non-integer scaling factor **204.** Using the information recorded at **202,** minimum adjustments for each control point of the rescaled vector-based graphic design to preserve, within threshold tolerances, relative spatial inter-relationships between the control points, and the positional relationships relative to pixels, are determined at **206.** The position of the control points of the vector-based graphic design are then adjusted, as will be described later, according to the minimum adjustments **208.** The adjustments preserve, or best approximate, the relative spatial inter-relationships and the positional relationships relative to pixels within threshold tolerances.

The threshold tolerance can be set to a relative percentage, such as, for example, 10% of the scaling factor or of coordinate values, or it can be set to a fixed multiple of a coordinate unit.

Certain vector-based graphic designs may also have effects applied to them, as discussed above. These effects may need to be adjusted in view of changes made as a result of the minimum adjustments. Optionally, effect adjustment values can be determined **210** to adjust the extent of the effects in accordance with the rescaling factor. The resulting rescaled vector-based graphic design may then be stored **212** in a non-transitory, tangible computer readable medium, rendered on a display, or both. The rendered, rescaled vector-based graphic design will preserve much of the original visual appearance of the original vector-based graphic design.

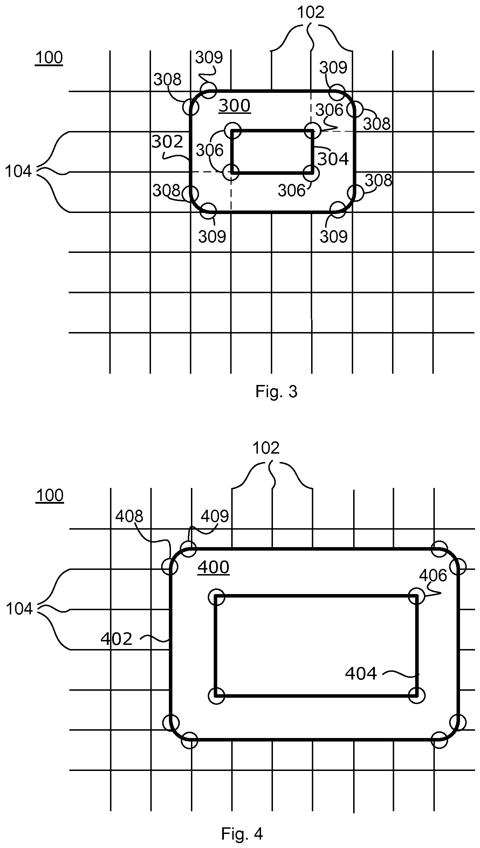

Figure 3 shows an example of a depiction of a vector-based graphic design **300** to be transformed or scaled according to an example of the present disclosure. Vector-based graphic **300** has two paths **302, 304.** These paths **302** and **304** may be mathematically described by an array of control points that define the paths relative to the coordinate system **100.** The inner path **304** is rectangular and has top and bottom edges that coincide with (i.e., are "snapped to") horizontal grid lines **104** and side edges that coincide with vertical grid lines **102.** According to an example, these lines, when rendered, will have a sharp visual appearance, since they are snapped directly to integer coordinates and will be rendered without pixel averaging (or anti-aliasing), and the lines, and other attributes, such as color, defining the edges do not cross adjacent pixel boundaries during rendering process. Inner path **304** includes corner nodes (control point) **306** which are snapped to integer values of both the horizontal grid lines **104** and the vertical grid lines **102,** which are shown as dashed lines intersecting at corner control point **306.** As a result, the entire inner path **304** coincides with integer values on at least one axis (or, in the case of the control points, both axes) of the coordinate system. The result is that inner path **304 ,** when rendered, will have a good visual appearance.

The control points **306** have particular relative spatial inter-relationships to one another. For example, the two topmost corner points **306** share a common y-coordinate, as do the two lower corner points **306,** and the distance between them corresponds to the full width an height of the inner path **304.** They also have an angular relationship to one another. Control points **306** also have their own positional relationships to the workspace coordinate system **100.** In the present example, control points **306** are snapped to integer coordinates at both its x and y values.

The vector-based graphic design **300** shown in Figure 3 also includes an outer path **302,** which represents boundaries of a vector mask. In this example, the outer path **302** represents a rounded rectangle. The outer path 302 is defined by a number of control points connected by mathematically described curves. Outer path **302** is defined, in part, by control points **308** and **309,** which define rounded corners shown in Figure 3. Control points **308** coincide with one of the vertical grid lines **102** and control points **309** coincide with one of the horizontal grid lines **104.** Control points **308** and **309** are smooth points that are snapped to integer values either on the X or the Y axis. As a result, a vertical part of the outer path **302** extending from the control point **308** will appear sharp and well-defined when rendered, as it will be snapped to a whole-pixel value. Further, a horizontal part of the outer path **302** extending from the control point **309** will also appear sharp and well-defined when rendered, as it will be snapped to a whole-pixel value. The portion of the outer path **302** extending between pairs of control points **308** and **309** defines the "rounded" corner of the rectangle.

As with control points **306** on inner path **304,** smooth control points **308** and **309** have relative spatial inter-relationships, as well as their own positional relationships to the coordinate system **100.** As one of ordinary skill in the art will appreciate, the quality and accuracy of any rescaling transformation of vector-based graphic design **300** will depend on the ability to maintain these relationships for corresponding control points of the rescaled vector-based graphic design.

Embodiments of the present disclosure determine the relative spatial inter-relationships of the control points in the vector-based graphic design, the positional relationship of each control point relative to closest integer-value coordinates, and the positions of the control points, within a same path, with respect to each other. For each control point of the vector-based graphic design, the relative spatial inter-relationships to other control points of the vector-based graphic design, and the positional relationship relative to coordinates are recorded (determined). According to an example, information about every vector mask, its paths and control points are recorded prior to any transformation step. The record - the snapshot - contains the relationships and information relating to all control points, the relationships between adjacent control points, and the spatial relationships of each control point within the coordinate system. For smooth control points, information regarding the handles (additional control points) of the smooth control points is also recorded.

Once the relationship information has been stored, the vector-based graphic design, for example, the vector-based graphic design shown at **300** in Figure 3, can be resized according to a desired rescaling factor. For the purposes of this example, the rescaling factor is a non-integer factor. The rescaling is achieved by a simple rescaling. That is, all the coordinate values of each control point in the vector-based graphic design **300** are multiplied by the given non-integer factor in order to re-scale the image to a desired image size. Figure 4 shows the result of such a rescaling operation. The resulting vector-based graphic design **400** is a larger version of vector-based graphic design **300.** The vector-based graphic design **400** has an inner path **404** and an outer path **402,** which correspond to the inner path **304** and the outer path **302** of vector-based graphic design **300,** respectively. Inner path **404** has a corner control point **406,** which corresponds to corner control point **306.**

Similarly, outer path **402** has smooth control points **408** and **409,** which corresponds to the smooth control points **308** and **309.** The rescaling has changed the relationships between the control points themselves as well as the relationships between the control points and the coordinate system **100.** As an example, control point **406** and outer control point **409** are no longer located on integer values of the coordinate system **100.** Rather, they are located off integer coordinates (and they will be rendered using pixel averaging) and, as a result, the rendered image will appear to be blurry and lacking in the sharpness present in the rendering of the original vector-based graphic design **300.**

As a first step, subsequent the rescaling, each vector mask (outer path **302** and inner path **304)** in the vector-based graphic design **300** is analyzed. For example, the outer path **402** is identified and from the recorded snapshot, individual control points of the outer path **402** are analyzed and a determination is made as to whether or not their corresponding control points in the original vector-based graphic design were located on integer coordinate values of the X-axis, Y-axis, or both. That is, a determination is made as to dimensions in the original vector-based graphic design **300** being integer values. If so for some or all of the control points in the original vector-based graphic design, a calculation is made to obtain a minimal scaling ratio for the x and y axes of the outer path **402** to have its dimensions (height and width) correspond to integer values. After these values of minimal scaling ratios are determined for the height and the width of the vector-based graphic design **400,** the entire vector mask is scaled by the minimal scaling ratios.

After the outer path **402** is scaled to have its width and height correspond to integer values, the next step regards finding a minimal distance to move (translate) the entire outer path **402.** The move can be desirable along the X-axis, Y-axis or both, depending on the stored snapshot information about the control points defining outer path **302.** Translation of the outer mask **402** can be either negative or positive relative to the position where the vector mask (outer mask **402)** is located, and translations can occur independently along the X and Y axes.

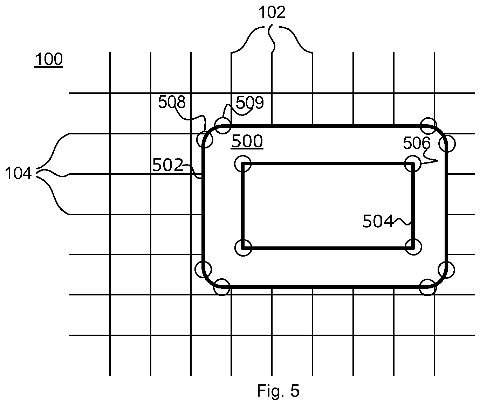

The result of the resizing according to a rescaling adjustment factor is shown in Figure 5. The vector-based graphic design **500** is now sized to fit within pixel boundaries that reflect the relationships that existed in vector-based graphic design **300** (the vector-based graphic design **500** has dimensions that correspond to integer values). According to an example, all vector masks in the vector-based graphic design **400,** i.e., the inner path **404** and outer path **402,** are adjusted according to a rescaling adjustment factor, resulting in vector-based graphic design **500** having the following adjusted control points. Control point **506,** which corresponds to corner control point **406** (and therefore corner control point **306);** smooth control points **508** and **509,** which correspond to smooth control points **408** and **409** (and therefore to smooth control points **308** and **309).**

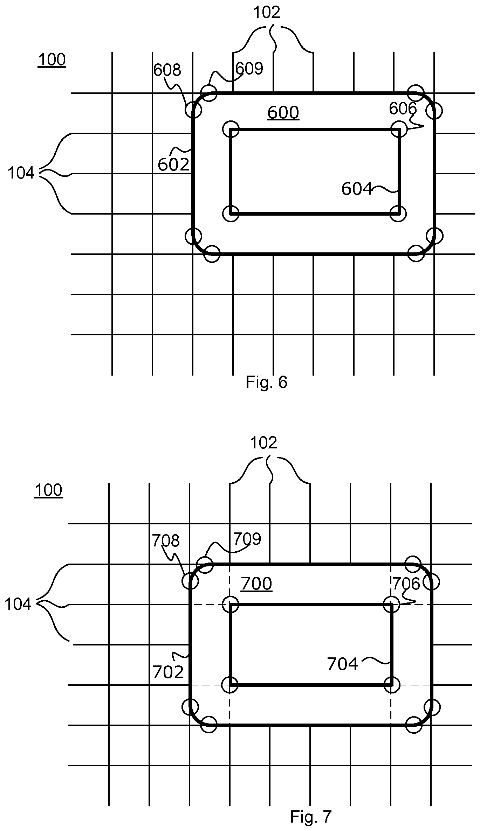

The result of translating the vector-based graphic design **500** according to a determined translation adjustment value is shown in Figure 6. The vector-based graphic design **600** has outer path **602,** which has side edges that coincide with vertical grid lines **102.** It also has top and bottom edges that coincide with horizontal grid lines **104.** As a result, the edges of outer path **602** of the vector-based graphic design **600** will have a good visual appearance, as they are now snapped to integer coordinate values within the coordinate system **100,** just as their corresponding edges were in the vector-based graphic design **300** prior to resizing. Outer path **602** has smooth control points **608** and **609,** which correspond to smooth control points **308** and **309** of vector-based graphic design **300.**

The vector-based graphic design **600** also has an inner path **604,** with four corner control points **606** corresponding to the four corner control point **306.** However, these control points **606**may not appear to be snapped to the same integer coordinates or have the same relationships as their corresponding control points in inner path **304** prior to scaling. As a result, inner path **604** may not have the same sharp and defined edges as its counterpart, inner path **304.** Accordingly, examples of the present disclosure may carry out a further comparison with the control point information stored in the snapshot for inner paths, or for any control point not forming part of the outer path.

For each control point in the inner path **604,** it is determined if eit was originally located on integer coordinate values (x-coordinate, y-coordinate, or both x and y coordinates). If the control point was originally located on an integer coordinate value but is not currently located on an integer coordinate value, a minimum change is calculated (similar as above) to transform this control point into a control point that is located on an integer coordinate value. Neighbor control points are checked to determine if they shared, in the original vector-based graphic design, a common coordinate value. If, in the original vector-based graphic design, they did share a common coordinate value, then they are adjusted to also share a common coordinate value in the transformed vector-based graphic design. As an example, original control points [x, 20], [x, 20] and [x, 30] are transformed and result in control points [x, 35.49], [x, 35.51], [x, 35.49] - as long as there is always a minimal margin error (these points are usually never at integer coordinate values). In such case, if using a simple rounding algorithm that rounds to a nearest value, vectors connecting the transformed control points will result in a zig-zag line, because the simple rounding algorithm will result in control points [x, 35], [x, 36], [x, 35]. By ensuring that control points that originally shared coordinate values also share coordinate values in the transformed vector-based graphic design, a straight line in the original vector-based graphic design will also be a straight line in the transformed vector-based graphic design. In the present example, the control points will be adjusted to [x, 35], [x, 35], [x, 35]. This is also valid for smooth control points and their handles.

Each individual control point may then be transformed according to its adjustment value determined in accordance with its current position and to the snapshot of the original vector-based graphic design. The result of such an adjustment to the nodes on vector-based graphic design **600** is shown in Figure 7. The original vector-based graphic design **300** now appears as vector-based graphic design **700,** having outer path **702** and inner path **704.** According to an example, the control points of outer path **702** have not been shifted and share the same coordinates as outer path **602.** The control points of inner path **704,** and particularly of adjusted control point t **706,** however, have been shifted slightly so that they are snapped to integer pixel values in the coordinate system **100,** as were their corresponding original control points **306.** In one example of adjusting operations according to certain examples, a smooth control point will be translated in the X-direction of the coordinate system **100** if 1) its corresponding smooth control point in the vector-based graphic design, prior to scaling, was aligned with a corresponding corner control point prior to scaling, 2) if that corner control point was shifted or adjusted, and 3) if the smooth control points needs to be adjusted in order to re-establish the angular relationship it shared with the corner control point prior to scaling.

The control points of the vector-based graphic design **700** now have relative spatial interrelationships and positional relationships with the coordinate system that preserve, as closely as possible within threshold tolerances, the relationships that their corresponding control points in the vector-based graphic design **300** had prior to scaling. The result is that adjusted vector-based graphic design **700** has now been rescaled while preserving much of the relationship information between the control points and the coordinate system. Accordingly, much of the manual re-alignment required after standard, brute force rescaling may no longer be necessary.

The control point-by-control point realignment may also be used to address any alignment errors of one vector mask relative to another that may have resulted from errors during the rescaling applied by commercially-available graphic design applications.

In some examples of the present disclosure, a vector mask (path) includes at least one effect applied to some or all of the regions within the vector mask. The methods described herein may also include determining effect adjustment values to adjust an extent of an effect based on the scaling factor applied to the rest of the vector-based graphic design. Effects of this nature, which can include a fill, shadow, blur, gradient, color, or any other imaging effects, may be stored as properties or attributes of the vector mask. In some cases, the effect may need to be propagated to the adjusted vector mask in order to preserve the integrity of the image during rescaling and processing. Therefore, an additional step whereby the effect and its relationship to the original vector mask are recomputed using the scaling factor of the vector-based graphic design and individual values of the effects are adjusted. Effects that are related to the size of a vector-based graphic design are rescaled at the same ratio at which the vector-based graphic design was rescaled.

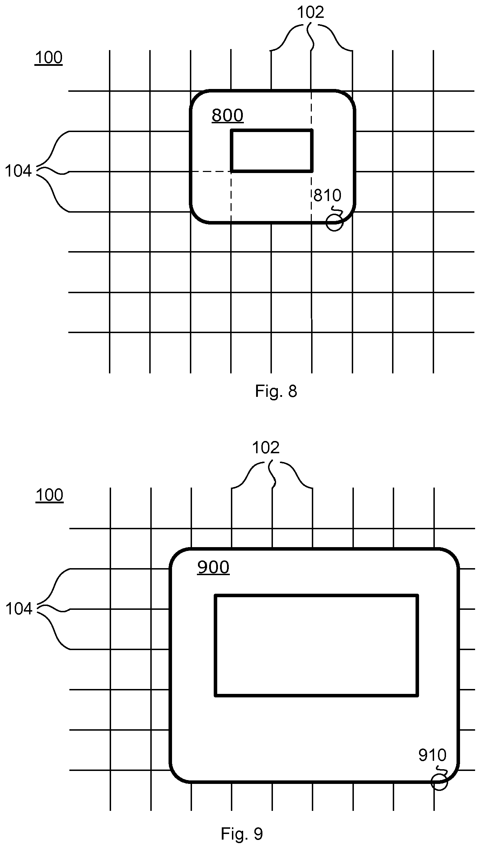

In an example where an initial vector-based graphic design has a control point that is not aligned with (snapped to) a pixel coordinate (an integer pixel coordinate), and where a scaling operation of the initial vector-based graphic design results in that control point still not being aligned with a pixel coordinate, the control point in question may be left as is. That is, further manipulation (re-scaling, translation, adjustment) of the vector-based graphic design, with respect to the control point in question may not be required. As an example, Figure 8 shows an initial vector-based graphic design **800** that has a control point **810,** which is not aligned with any pixel coordinate. Figure 9 shows vector-based graphic design **900,** which is a scaled version of the initial vector-based graphic design **800,** the scaling factor being a non-integer value. The control point **910** in Figure 9 corresponds to the control point **810** of Figure 8. As control point **910** is also not aligned with any pixel coordinate, no further manipulation of the vector-based graphic design **900** needs to be carried out with respect to the control point **910.** Of course, further manipulation of the vector-based graphic design **900** may be carried out with respect to other control points (not shown) of the vector-based graphic design, as described above in respect of other examples.

The examples discussed above employ four different adjustments: a rescaling adjustment factor, a translation adjustment value, a control point adjustment value and an effect adjustment. However, as one of ordinary skill will appreciate, all adjustments are not always necessary, and the method described herein may be effected using any or all types of adjustments.

In the preceding description, for purposes of explanation, numerous details are set forth in order to provide a thorough understanding of the examples. However, it will be apparent to one skilled in the art that these specific details are not required. In other instances, well-known electrical structures and circuits are shown in block diagram form in order not to obscure the understanding. For example, specific details are not provided as to whether the examples described herein are implemented as a software routine, hardware circuit, firmware, or a combination thereof.

Examples of the disclosure can be represented as a computer program product stored in a tangible, non-transitory machine-readable medium (also referred to as a computer-readable medium, a processor-readable medium, or a computer usable medium having a computer-readable program code embodied therein). The machine-readable medium can be any suitable tangible, non-transitory medium, including magnetic, optical, or electrical storage medium including a diskette, compact disk read only memory (CD-ROM), memory device (volatile or non-volatile), or similar storage mechanism. The machine-readable medium can contain various sets of instructions, code sequences, configuration information, or other data, which, when executed, cause a processor to perform steps in a method according to an example of the disclosure. The examples described herein may be implemented or executed on any suitable hardware, including a general purpose computer, mobile electronic device, tablet, etc. having a processor for executing the instructions stored on the machine-readable medium.

Those of ordinary skill in the art will appreciate that other instructions and operations necessary to implement the described implementations can also be stored on the machine-readable medium. The instructions stored on the machine-readable medium can be executed by a processor or other suitable processing device, and can interface with circuitry to perform the described tasks. The machine-readable medium may also contain a database for storing any other information required for the operation of the above examples, including, but not limited to, the snapshot and any information regarding spatial interrelationships between control points and/or positional relationships relative to pixels.

Embodiments of the disclosure may also be implemented as a device or system having a processor or microprocessor, and a display. For example, embodiments of the disclosure may be implemented in a general purpose computer, or an electronic device, such as a television projection screen, wirelessly enabled notebook computer, tablet computer, mobile internet device, electronic navigation device, and so forth.

The above-described examples are intended to be examples only. Alterations, modifications and variations can be effected to the particular examples by those of skill in the art without departing from the scope, which is defined solely by the claims appended hereto.

## Claims

1. A computer-implemented method of transforming a vector-based graphic design, the method for implementation by an electronic device, the method comprising:
determining the relative spatial inter-relationships of control points in the vector-based graphic design, and the positional relationship of each control point relative to a workspace coordinate system, based on positions of the control points of the vector-based graphic design in the workspace coordinate system, wherein the control points define the vector-based graphic design;
recording, for each control point of the vector-based graphic design and subsequent to determining the relative spatial inter-relationships of the control points, its relative spatial inter-relationships to other points of the vector-based graphic design and its positional relationship relative to the workspace coordinate system;
rescaling (202), subsequent to said recording, the vector-based graphic design by a non-integer rescaling factor, the vector-based graphic design including said control points, the control points having coordinates in a workspace coordinate system, each control point having relative spatial inter-relationships to other control points of the vector-based graphic design and having a positional relationship relative to the workspace coordinate system;
automatically determining (206) minimum adjustments for each control point of the rescaled vector-based graphic design to preserve, within threshold tolerances, determined relative spatial inter-relationships and a determined positional relationship relative to the workspace coordinate system, wherein the positional relationship relative to the workspace coordinate system comprises a position coincident with integer coordinate values and wherein automatically determining the minimum adjustments comprises identifying an outer path of the vector-based graphic design;
calculating minimal scaling ratios for the x and y axes of the outer path to have its height and width correspond to integer values;
scaling the outer path by the minimal scaling ratios;
determining a minimal distance to translate the scaled outer path to integer coordinate values;
translating the scaled outer path by the minimal distance;
; and
storing (212) the rescaled vector-based graphic design in a non-transitory, tangible computer-readable medium.

2. The method of claim 1, wherein the control points include a smooth control point having a handle associated thereto, wherein the handle is an auxiliary control point and the handle defines the curvature of a line between the control points by attracting the line, wherein automatically determining minimum adjustments for the smooth control point comprises automatically determining minimum adjustments for the handle, and wherein adjusting a position of the smooth control point comprises adjusting a position of the handle.

3. The method of claim 1, wherein automatically determining the minimum adjustments comprises determining a minimum rescaling adjustment factor to preserve positional relationships of an outer path of the vector-based graphic design, relative to the workspace coordinate system, and wherein the outer path is defined by an outer vector mask.

4. The method of claim 1, wherein automatically determining the minimum adjustments comprises determining minimum point adjustment values to preserve the relative spatial inter-relationships.

5. The method of claim 1, wherein the relative spatial inter-relationships comprise relative spatial relationships to neighboring control points.

6. The method of claim 5, wherein the relative spatial inter-relationships comprise at least one of angular relationships and relative distances.

7. The method of claim 1, wherein the positional relationship relative to the workspace coordinate system comprises a position between two integer coordinate values.

8. The method of claim 1, wherein the vector-based graphic design comprises at least one vector mask.

9. The method of claim 8, wherein the vector mask includes an effect applied to the vector mask, the method further comprising determining effect adjustment values to adjust an extent of the effect based on the minimum adjustments applied to the control points of the rescaled vector-based graphic design.

10. A system for transforming a vector-based graphic design according to any one of claims 1-9.

11. A non-transitory computer-readable medium storing instructions, which, when executed, cause a processor to execute the method of any one of claims 1-9.

## Patentansprüche

1. Computerimplementiertes Verfahren zum Transformieren eines vektorbasierten Graphikentwurfs, wobei das Verfahren durch eine elektronische Vorrichtung implementiert werden kann, wobei das Verfahren Folgendes umfasst:
Bestimmen der relativen räumlichen Zwischenbeziehungen von Kontrollpunkten in dem vektorbasierten Graphikentwurf und der Positionsbeziehung jedes Kontrollpunkts in Bezug auf ein Arbeitsraum-Koordinatensystem anhand von Positionen der Kontrollpunkte des vektorbasierten Graphikentwurfs in dem Arbeitsraum-Koordinatensystem, wobei die Kontrollpunkte den vektorbasierten Graphikentwurf definieren;
Aufzeichnen, für jeden Kontrollpunkt des vektorbasierten Graphikentwurfs und nach dem Bestimmen der relativen räumlichen Zwischenbeziehungen der Kontrollpunkte, seiner relativen räumlichen Zwischenbeziehungen zu anderen Punkten des vektorbasierten Graphikentwurfs und seiner Positionsbeziehung relativ zu dem Arbeitsraum-Koordinatensystem;
neues Skalieren (202), nach dem Aufzeichnen des vektorbasierten Graphikentwurfs, mit einem nicht ganzzahligen Neuskalierungsfaktor, wobei der vektorbasierte Graphikentwurf die Kontrollpunkte enthält, wobei die Kontrollpunkte Koordinaten in einem Arbeitsraum-Koordinatensystem haben, wobei jeder Kontrollpunkt relative räumliche Zwischenbeziehungen zu anderen Kontrollpunkten des vektorbasierten Graphikentwurfs und eine Positionsbeziehung relativ zu dem Arbeitsraum-Koordinatensystem hat;
automatisches Bestimmen (206) minimaler Einstellungen für jeden Kontrollpunkt des neu skalierten vektorbasierten Graphikentwurfs, um innerhalb von Schwellentoleranzen bestimmte relative räumliche Zwischenbeziehungen und eine bestimmte Positionsbeziehung relativ zu dem Arbeitsraum-Koordinatensystem zu bewahren, wobei die Positionsbeziehung relativ zu dem Arbeitsraum-Koordinatensystem eine Position enthält, die mit ganzzahligen Koordinatenwerten zusammenfällt, und wobei das automatische Bestimmen der minimalen Einstellungen das Identifizieren eines äußeren Pfades des vektorbasierten Graphikentwurfs umfasst;
Berechnen minimaler Skalierungsverhältnisse für die x- und die y-Achse des äußeren Pfades, damit ihre Höhe und ihre Breite ganzzahligen Werten entsprechen;
Skalieren des äußeren Pfades durch die minimalen Skalierungsverhältnisse;
Bestimmen eines minimalen Abstands, um den skalierten äußeren Pfad in ganzzahlige Koordinatenwerte zu übersetzen;
Übersetzen des skalierten äußeren Pfades durch den minimalen Abstand; und
Speichern (212) des neu skalierten vektorbasierten Graphikentwurfs in einem nichtflüchtigen, körperlichen computerlesbaren Medium.

2. Verfahren nach Anspruch 1, wobei die Kontrollpunkte einen glatten Kontrollpunkt haben, dem ein Griff zugeordnet ist, wobei der Griff ein Hilfskontrollpunkt ist und wobei der Griff die Krümmung einer Linie zwischen den Kontrollpunkten durch Ziehen an der Linie definiert, wobei das automatische Bestimmen minimaler Einstellungen für den glatten Kontrollpunkt das automatische Bestimmen minimaler Einstellungen für den Griff umfasst und wobei das Einstellen einer Position des glatten Kontrollpunkts das Einstellen einer Position des Griffs umfasst.

3. Verfahren nach Anspruch 1, wobei das automatische Bestimmen der minimalen Einstellungen das Bestimmen eines minimalen Neuskalierungseinstellfaktors umfasst, um Positionsbeziehungen eines äußeren Pfades des vektorbasierten Graphikentwurfs relativ zu dem Arbeitsraum-Koordinatensystem zu bewahren, und wobei der äußere Pfad durch eine äußere Vektormaske definiert ist.

4. Verfahren nach Anspruch 1, wobei das automatische Bestimmen der minimalen Einstellungen das Bestimmen von Minimalpunkt-Einstellwerten umfasst, um die relativen räumlichen Zwischenbeziehungen zu bewahren.

5. Verfahren nach Anspruch 1, wobei die relativen räumlichen Zwischenbeziehungen Relativpositionsbeziehungen zu benachbarten Kontrollpunkten enthalten.

6. Verfahren nach Anspruch 5, wobei die relativen räumlichen Zwischenbeziehungen Winkelbeziehungen und/oder relative Abstände umfassen.

7. Verfahren nach Anspruch 1, wobei die Positionsbeziehung relativ zu dem Arbeitsraum-Koordinatensystem eine Position zwischen zwei ganzzahligen Koordinatenwerten enthält.

8. Verfahren nach Anspruch 1, wobei der vektorbasierte Graphikentwurf wenigstens eine Vektormaske enthält.

9. Verfahren nach Anspruch 8, wobei die Vektormaske eine auf die Vektormaske angewendete Wirkung enthält, wobei das Verfahren ferner das Bestimmen von Wirkungseinstellwerten umfasst, um ein Ausmaß der Wirkung anhand der minimalen Einstellungen, die auf die Kontrollpunkte des neu skalierten vektorbasierten Graphikentwurfs angewendet werden, einzustellen.

10. System zum Transformieren eines vektorbasierten Graphikentwurfs nach einem der Ansprüche 1-9.

11. Nichtflüchtiges computerlesbares Medium, das Befehle speichert, die dann, wenn sie abgearbeitet werden, einen Prozessor veranlassen, das Verfahren nach einem der Ansprüche 1-9 auszuführen.

## Revendications

1. Procédé mis en oeuvre par ordinateur permettant de transformer un dessin graphique à base de vecteurs, le procédé étant destiné à la mise en oeuvre par un dispositif électronique, le procédé comprenant :
la détermination des inter-relations spatiales relatives de points de contrôle dans le dessin graphique à base de vecteurs, et de la relation de position de chaque point de contrôle par rapport à un système de coordonnées d'espace de travail, sur la base de positions des points de contrôle du dessin graphique à base de vecteurs dans le système de coordonnées d'espace de travail, où les points de contrôle définissent le dessin graphique à base de vecteurs ;
l'enregistrement, pour chaque point de contrôle du dessin graphique à base de vecteurs et à la suite de la détermination des inter-relations spatiales relatives des points de contrôle, de ses inter-relations spatiales relatives avec d'autres points du dessin graphique à base de vecteurs et de sa relation de position par rapport au système de coordonnées d'espace de travail ;
le rééchelonnage (202), à la suite dudit enregistrement, du dessin graphique à base de vecteurs par un facteur de rééchelonnage non entier, le dessin graphique à base de vecteurs incluant lesdits points de contrôle, les points de contrôle ayant des coordonnées dans un système de coordonnées d'espace de travail, chaque point de contrôle ayant des inter-relations spatiales relatives avec d'autres points de contrôle du dessin graphique à base de vecteurs et ayant une relation de position par rapport au système de coordonnées d'espace de travail ;
la détermination automatique (206) d'ajustements minimums pour chaque point de contrôle du dessin graphique à base de vecteurs rééchelonné pour préserver, à l'intérieur de tolérances de seuil, des inter-relations spatiales relatives déterminées et une relation de position déterminée par rapport au système de coordonnées d'espace de travail, où la relation de position par rapport au système de coordonnées d'espace de travail comprend une position coïncidente avec des valeurs de coordonnées entières et où la détermination automatique des ajustements minimums comprend l'identification d'un chemin extérieur du dessin graphique à base de vecteurs ;
le calcul de rapports d'échelonnage minimaux pour les axes x et y du chemin extérieur afin que sa hauteur et sa largeur correspondent à des valeurs entières ;
l'échelonnage du chemin extérieur par les rapports d'échelonnage minimaux ;
la détermination d'une distance minimale pour translater le chemin extérieur échelonné à des valeurs de coordonnées entières ;
la translation du chemin extérieur échelonné par la distance minimale ; et
le stockage (212) du dessin graphique à base de vecteurs rééchelonné dans un support lisible par ordinateur tangible, non transitoire.

2. Procédé selon la revendication 1, dans lequel les points de contrôle incluent un point de contrôle lisse ayant une poignée associée à celui-ci, dans lequel la poignée est un point de contrôle auxiliaire et la poignée définit la courbure d'une ligne entre les points de contrôle par attraction de la ligne, dans lequel la détermination automatique d'ajustements minimums pour le point de contrôle lisse comprend la détermination automatique d'ajustements minimums pour la poignée, et dans lequel l'ajustement d'une position du point de contrôle lisse comprend l'ajustement d'une position de la poignée.

3. Procédé selon la revendication 1, dans lequel la détermination automatique des ajustements minimums comprend la détermination d'un facteur d'ajustement de rééchelonnage minimum pour préserver des relations de position d'un chemin extérieur du dessin graphique à base de vecteurs, par rapport au système de coordonnées d'espace de travail, et dans lequel le chemin extérieur est défini par un masque vectoriel extérieur.

4. Procédé selon la revendication 1, dans lequel la détermination automatique des ajustements minimums comprend la détermination de valeurs d'ajustement de points minimums pour préserver les inter-relations spatiales relatives.

5. Procédé selon la revendication 1, dans lequel les inter-relations spatiales relatives comprennent des relations spatiales relatives avec des points de contrôle voisins.

6. Procédé selon la revendication 5, dans lequel les inter-relations spatiales relatives comprennent au moins une de relations angulaires et de distances relatives.

7. Procédé selon la revendication 1, dans lequel la relation de position relative au système de coordonnées d'espace de travail comprend une position avec deux valeurs de coordonnées entières.

8. Procédé selon la revendication 1, dans lequel le dessin graphique à base de vecteurs comprend au moins un masque vectoriel.

9. Procédé selon la revendication 8, dans lequel le masque vectoriel inclut un effet appliqué au masque vectoriel, le procédé comprenant en outre la détermination de valeurs d'ajustement d'effet pour ajuster une étendue de l'effet sur la base des ajustements minimums appliqués aux points de contrôle du dessin graphique à base de vecteurs rééchelonné.

10. Système pour transformer un dessin graphique à base de vecteurs selon l'une quelconque des revendications 1 à 9.

11. Support lisible par ordinateur non transitoire stockant des instructions, qui, lorsqu'elles sont exécutées, amènent un processeur à exécuter le procédé selon l'une quelconque des revendications 1 à 9.
